# EUROPEAN PATENT APPLICATION

(11) **EP 4 734 326 A1**
(43) Date of publication of application: **29.04.2026**
(21) Application number: 25211629.8
(22) Date of filing: 28.10.2025
(51) Int. Cl.: H02J 9/06, H02J 3/01, H02J 3/001

(54) **METHOD AND DEVICE FOR CONTROLLING UNINTERRUPTIBLE POWER SUPPLY**

(30) Priority: 28.10.2024 CN 202411516875
(71) Applicant: Vertiv Corporation, Westerville, OH 43082 (US)
(72) Inventor: BING, Yang, Shenzhen, 518055 (CN); ZHANG, Dong, Shenzhen, 518055 (CN); WANG, Xunchao, Shenzhen, 518055 (CN)
(74) Representative: Ambroz, Simon

(57) **Abstract**

Provided in the present disclosure are a method and a device for controlling a UPS, with which power supply cost for a DC bus is reduced. The method for controlling a UPS includes: controlling a first part of power modules in the UPS to work in a harmonic compensation mode when it is determined that the bypass module in the UPS is working and the UPS has no fault, wherein the UPS comprises the first part of the power modules and a second part of the power modules; detecting a bus voltage of each power module of the second part of the power modules; and controlling an inverter in a target power module to obtain power from an output terminal of the bypass module, performing single-phase rectification on the obtained power, and powering a DC bus in the target power module, wherein the target power module is a power module which has a bus voltage less than a first set value among the second part of the power modules.

## Description

The present application claims priority to Chinese Patent Application No. 202411516875.7, titled "METHOD AND DEVICE FOR CONTROLLING UNINTERRUPTIBLE POWER SUPPLY", filed on October 28, 2024 with the China National Intellectual Property Administration.

### FIELD

The present disclosure relates to the technical field of power electronics, and in particular to a method and a device for controlling an uninterruptible power supply.

### BACKGROUND

An uninterruptible power supply (UPS) is generally equipped with multiple power modules connected in parallel, and the power modules may realize functions such as rectification and inversion. At present, in order to improve an efficiency of the UPS, the UPS may support a bypass power supply mode. A bypass module is directly connected between an input terminal and an output terminal of the UPS module, and an AC power supply connected to the input terminal of the UPS may directly power a load through the bypass module. During power supply, only a portion of power modules operate for harmonic compensation while the other power modules are in a sleep state. Therefore, the efficiency of the UPS can be improved. However, in the above-mentioned bypass power supply mode, since some power modules are in the sleep state, a bus of the power modules may have a voltage drop due to inability to obtain the supplied power. When the UPS module needs to be switched from the bypass power supply mode to a power module power supply mode, the bus voltage in the dormant power module needs to be charged to a set value before normal power supply is achieved, which affects a switching speed of the UPS from the bypass power supply to the power module power supply.

### SUMMARY

An object of the present disclosure is to provide a method and a device for controlling a UPS, with which power supply cost for a DC bus may be reduced, and a switching speed of the UPS from bypass power supply to power module power supply may be improved.

In the first aspect, a method for controlling a UPS is provided in the present disclosure. The method is applicable to a UPS having a bypass module. When the UPS fails, the bypass module may be directly connected to an external three-phase AC power supply and a load, and may power the load. Further, when the UPS has no fault, the bypass module may be directly connected to the external three-phase AC power supply and the load, and may control a portion of power modules in the UPS to perform harmonic compensation on a three-phase AC power outputted by the bypass module. As such, stability and quality of power supply of the UPS may be improved. Since most of the power modules in the UPS are in a sleep mode, device loss of the UPS can be significantly reduced and efficiency of the UPS can be improved. According to the method for controlling a UPS provided in the example of the present disclosure, bus voltages of dormant power modules are maintained by controlling a small number of devices to operate, when the bypass module supplies power. The method mainly includes the following steps:
controlling a first part of power modules in the UPS to work in a harmonic compensation mode, when it is determined that the bypass module in the UPS is working and the UPS has no fault, wherein the UPS comprises the first part of the power modules and a second part of the power modules; detecting a bus voltage of each power module of the second part of the power modules; and controlling an inverter in a target power module to obtain power from an output terminal of the bypass module, performing single-phase rectification on the obtained power, and powering a DC bus in the target power module, wherein the target power module is a power module which has a bus voltage less than a first set value among the second part of the power modules.

In the above solution, the inverter is a bidirectional transmission device, that is, the inverter can obtain a DC power from the DC bus connected to an input terminal and perform inversion processing, and can obtain an AC power from an output terminal and perform rectification processing thereon. When it is detected that a bus voltage of a dormant power module drops, the inverter in the power module may be controlled to perform the rectification processing and power the connected DC bus to ensure stability of the bus voltage. Other devices are turned off to reduce the device loss of the power module. In the actual operation, although the bypass module outputs the three-phase AC power required by the load, the inverter performs single-phase rectification, and at least half of the switching devices are turned off compared with a case where all switching transistor devices work for three-phase rectification, and thus the device loss during the power supply process for the DC bus is further reduced.

In a possible implementation, the controlling an inverter in a target power module to obtain power from an output terminal of the bypass module and the performing single-phase rectification on the obtained power may include: controlling the inverter in the target power module to obtain a three-phase AC power outputted by the bypass module, and performing the single-phase rectification on the three-phase AC power. With this solution, since the inverter is generally connected to the output terminal of the bypass module through relays or other switching devices, the relays may control electrical connections between the inverter and three phase lines of the bypass module for transmitting the three-phase AC power. All the relays may be controlled to be closed, and the inverter may obtain the three-phase AC power through the closed relays. The inverter may include inverting units for processing A-phase AC power, B-phase AC power and C-phase AC power respectively, and one of the inverting units may be controlled to work and the other inverting units may be switched off. In this way, the device loss during the power supply process for the DC bus is further reduced.

In a possible implementation, the controlling an inverter in a target power module to obtain power from an output terminal of the bypass module and the performing single-phase rectification on the obtained power may include: controlling the inverter in the target power module to obtain a single-phase AC power from a three-phase AC power outputted by the bypass module, and performing rectification on the obtained single-phase AC power. With this solution, since the inverter is generally connected to the output terminal of the bypass module through relays or other switching devices, the relays may control electrical connections between the inverter and three phase lines for transmitting the three-phase AC power. A relay connected to one of the phase lines may be controlled to be closed, and the inverter may receive the single-phase power through the relay and perform rectification processing. The relays connected to the other phase lines are switched off. In this way, the device loss during the power supply process for the DC bus is further reduced.

In a possible implementation, when each power module includes multiple inverters connected in parallel, the performing single-phase rectification on the obtained power may include: controlling a target inverter in the target power module to perform the single-phase rectification on the obtained power, and controlling other inverters to stop working, wherein the target inverter is any one the inverters in the target power module, and the other inverters are inverters other than the target inverter in the target power module. With this design, the target power module does not participate in power supply to the load, and thus there are fewer power consumption devices. Therefore, in order to reduce the device loss during the power supply process for the DC bus, one of the inverters may be controlled to participate in power supply to the DC bus while the other inverters stop working.

In the second aspect, a method for controlling a UPS is provided in an example of the present disclosure. The method is applicable to a UPS having a bypass module. According to the method for controlling a UPS provided in the example of the present disclosure, bus voltages of dormant power modules are maintained by controlling a small number of devices to operate, when the bypass module supplies power. The method mainly includes the following steps:
controlling a first part of power modules in the UPS to work in a harmonic compensation mode, when it is determined that the bypass module in the UPS is working and the UPS has no fault, wherein the UPS comprises the first part of the power modules and a second part of the power modules; detecting a bus voltage of each power module of the second part of the power modules; and controlling a rectifier in a target power module to obtain power from a connected power supply, performing single-phase rectification on the obtained power, and powering a DC bus in the target power module, wherein the target power module is a power module which has a bus voltage less than a first set value among the second part of the power modules.

With the above solution, the rectifier may be a unidirectional transmission device, or may be a bidirectional transmission device. When it is detected that a bus voltage of a dormant power module drops, the rectifier in the power module may be controlled to perform rectification processing and power the connected DC bus to ensure stability of the bus voltage. Other devices are turned off to reduce device loss of the power module. In the actual operation, although the UPS is connected to an external three-phase AC power supply, the rectifier performs single-phase rectification, and at least half of the switching devices are turned off compared with a case where all switching transistor devices work for three-phase rectification, and thus the device loss during the power supply process for the DC bus is further reduced.

In a possible implementation, the method may include controlling the rectifier in the target power module to obtain a three-phase AC power received by an input terminal of the bypass module, and performing the single-phase rectification on the obtained three-phase AC power. With this solution, the rectifier is generally connected to three phase lines for transmitting the three-phase AC power through relays or other switching devices. All the relays may be controlled to be closed, and the rectifier may obtain the three-phase AC power through the closed relays. The rectifier may include rectifying units for processing A-phase AC power, B-phase AC power and C-phase AC power respectively. One of the rectifying units may be controlled to work, and the other rectifying units may be switched off. In this way, the device loss during the power supply process for the DC bus is further reduced.

In a possible implementation, the method may include controlling the rectifier in the target power module to obtain a single-phase AC power from a three-phase AC power received by an input terminal of the bypass module, and performing rectification on the obtained single-phase AC power. With this solution, the rectifier is generally connected to three phase lines of a power supply for transmitting the three-phase AC power through relays or other switching devices. A relay connected to one of the phase lines may be controlled to be closed, and the rectifier may obtain the single-phase AC power through the closed relay and perform rectification of the single-phase AC power. The relays connected to the other phase lines are switched off. In this way, the device loss during the power supply process for the DC bus is further reduced.

In a possible implementation, when each power module includes multiple rectifiers connected in parallel, the performing single-phase rectification on the obtained power may include: controlling a target rectifier in the target power module to perform the single-phase rectification on the obtained power, and controlling other rectifiers to stop working, wherein the target rectifier is any one of the rectifiers in the target power module, and the other rectifiers are rectifiers other than the target rectifier in the target power module. With this design, the target power module does not participate in power supply to the load, and thus there are fewer power consumption devices. Therefore, in order to reduce the device loss during the power supply process for the DC bus, one of the rectifiers may be controlled to participate in the power supply to the DC bus while the other rectifiers stop working.

In the third aspect, a method for controlling a UPS is provided in an example of the present disclosure. The method is applicable to a UPS having a bypass module. According to the method for controlling a UPS provided in the example of the present disclosure, bus voltages of dormant power modules are maintained by controlling a small number of devices to operate when the bypass module supplies power. The method mainly includes the following steps:
controlling a first part of power modules in the UPS to work in a harmonic compensation mode, when it is determined that the bypass module in the UPS is working and the UPS has no fault, wherein the UPS comprises the first part of the power modules and a second part of the power modules; detecting a bus voltage of each power module if the second part of the power modules; and controlling a battery charger/discharger connected to a battery pack to obtain power from the battery pack, boosting the obtained power, and powering a DC bus in a target power module, wherein the target power module is a power module which has a bus voltage less than a first set value among the second part of the power modules.

With the above solution, in order to realize the uninterruptible power supply function of the UPS, a battery pack is generally provided for continuously supplying power to the load when the external AC power supply fails. The battery pack may be disposed inside or outside the UPS. When it is detected that the bus voltage of the dormant power module drops, the second part of the power modules may be controlled to remain in the sleep state, and the battery pack may utilize the stored power or obtain power from the first part of the power modules that are working, and may power the DC bus of the target power module by using the battery charger/discharger. Since the battery charger/discharger only has the boost and buck function and has a small number of devices, when the DC bus is powered by using the device, the device loss during the power supply process for the DC bus can be effectively reduced.

In a possible implementation, when each battery charger/discharger includes multiple battery charging and discharging circuits connected in parallel, the boosting the obtained power and the powering a DC bus in a target power module may include: controlling a target battery charging and discharging circuit to boost the obtained power to power the DC bus in the target power module, and controlling other battery charging and discharging circuits to stop working, wherein the target battery charging and discharging circuit is any one of the battery charging and discharging circuits in the battery charger/discharger, and the other battery charging and discharging circuits are battery charging and discharging circuits other than the target battery charging and discharging circuit in the battery charger/discharger. With this design, the target power module does not participate in power supply to the load, and thus there are fewer power consumption devices. Therefore, in order to reduce the device loss during the power supply process for the DC bus, one of the battery charging and discharging circuits may be controlled to participate in the power supply to the DC bus while the other battery charging and discharging circuits stop working.

In the fourth aspect, a device for controlling a UPS is provided in an example of the present disclosure. The device includes at least one processor, and a memory communicatively connected to the at least one processor. The memory stores instructions executable by the at least one processor, and the instructions are executed by the at least one processor to cause the at least one processor to perform the methods as provided in the first to third aspects of the present disclosure and any possible design thereof.

In addition, technical effects brought about by the fourth aspect and any possible design thereof may be understood by referring to the technical effects brought about by various designs in the first to third aspects of the examples of the present disclosure, and are not described in detail here.

### BRIEF DESCRIPTION OF THE DRAWINGS

For clearer illustration of the technical solutions according to examples of the present disclosure, hereinafter briefly described are the drawings to be applied in examples of the present disclosure. Apparently, these drawings only relate to some examples of the present disclosure, and additional drawings may be obtained by those skilled in the art based on the provided drawings without any creative effort.
Figure 1 is a schematic structural diagram of a UPS according to an example of the present disclosure;
   Figure 2 is a schematic structural diagram of a power module according to an example of the present disclosure;
   Figure 3 is a schematic flowchart of a method for controlling a UPS according to the first example of the present disclosure;
   Figure 4 is the first schematic diagram of power transmission of a DC bus according to an example of the present disclosure;
   Figure 5 is a schematic flowchart of a method for controlling a UPS according to the second example of the present disclosure;
   Figure 6 is the second schematic diagram of power transmission of a DC bus according to an example of the present disclosure;
   Figure 7 is a schematic flowchart of a method for controlling a UPS according to the third example of the present disclosure;
   Figure 8 is the third schematic diagram of power transmission of a DC bus according to an example of the present disclosure; and
   Figure 9 is a schematic structural diagram of a device for controlling a UPS according to an example of the present disclosure.

### DETAILED DESCRIPTION

Examples of the present disclosure will be described in conjunction with the accompanying drawings.

Terms used in the examples of the present disclosure are only for explaining the specific examples of the present disclosure, and are not intended to limit the present disclosure. Apparently, the examples described below are only part of examples, rather than all the examples of the present disclosure. Any other examples obtained by those skilled in the art based on the examples described in the present disclosure without any creative effort shall fall within the protection scope of the present disclosure.

An application scenario of a method for controlling a UPS in the examples of the present disclosure is described in detail below with reference to the accompanying drawings.

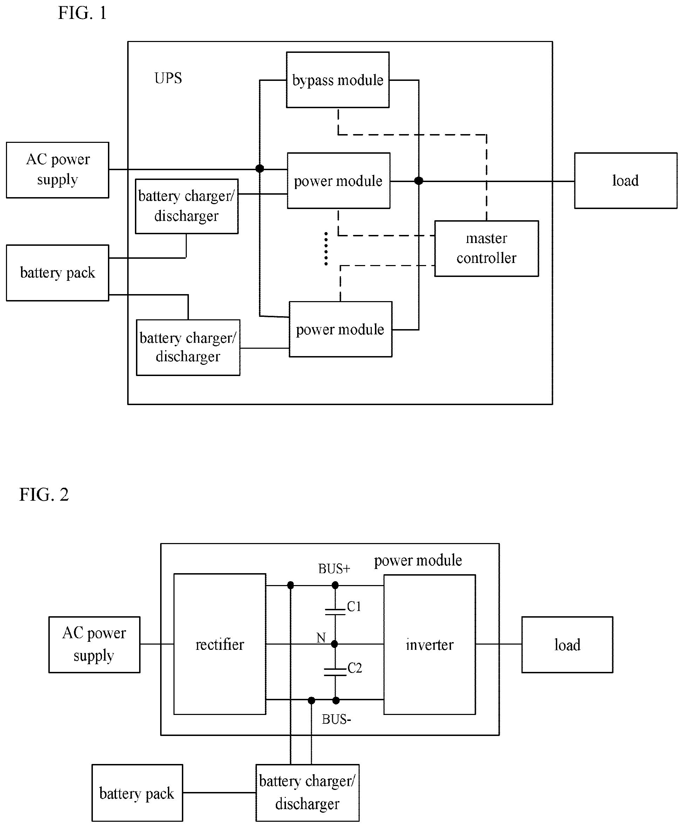

The method for controlling a UPS of the present disclosure may be applied to a UPS. Reference is made to Figure 1, which is a schematic structural diagram of the UPS. The UPS may include multiple power modules and a bypass module which are connected in parallel, and further include a master controller and a battery charger/discharger. The master controller may control operation of other modules. A structure of the power module is shown in Figure 2. As shown in Figure 2, each power module may include a rectifier, a DC bus and an inverter connected in sequence. The DC bus is formed by bus capacitors C1 and C2 connected in series. BUS+ refers to a high-level potential of the DC bus in the power module, and BUS-refers to a low-level potential of the DC bus.

In the actual application, each power module may be connected to an external battery pack, or the UPS may be equipped with an internal battery pack. The battery charger/discharger within the UPS may perform voltage regulation to accomplish a conversion between a power module bus voltage and a battery charging voltage. For example, when it is necessary to charge the battery pack, the battery charger/discharger may reduce a bus voltage of the DC bus in the power module and charge the battery pack. When an AC power supply connected to the UPS fails, the battery charger/discharger may boost a voltage of the battery pack to power the DC bus, and the power module may power a load connected to a rear end of the UPS by using the above-mentioned power. In this way, the uninterruptible power supply function of the UPS is realized.

It should be noted that the example of the present disclosure is described by way of an example in which the power module and the bypass module share an AC power supply. In the actual application, the bypass module and the power module may be powered by separate power supplies, which is not specifically limited in the present disclosure.

It should be noted that the structure of the UPS shown in Figure 1 is only an example. In practice, the UPS may further include other components. For example, the UPS may further include a circuit breaker connected between the UPS and the external AC power supply.

The UPS shown in Figure 1 may have two power supply modes, namely, a bypass power supply mode and a power module power supply mode. When the UPS is in the bypass power supply mode, part of power modules within the UPS are activated to perform harmonic compensation for an output voltage of the bypass module, thereby ensuring stability of the output power of the UPS. Other power modules are in a sleep state, so that an efficiency of the UPS is improved. When the UPS is in the power module power supply mode, the bypass module stops working, and all the power modules work to convert the power of the external power supply to power a load.

Since a portion of the power modules within the UPS are in the sleep mode when the UPS is in the bypass power supply mode, the DC buses of the dormant power modules have no power source, which may result in a drop of the bus voltage of the dormant power module. when the UPS is switched from the bypass power supply mode to the power module power supply mode, the power module in the sleep state fails to supply power to the load normally due to a low bus voltage, and it takes a certain time for the bus voltage of this power module to be charged, which affects the switching speed of the UPS from the bypass power supply to the power module power supply. If all power modules are woken up to supply power to the bus voltage when the UPS is in the bypass power supply mode, the power supply cost for the DC bus may be increased and the efficiency of the UPS may be reduced.

In order to solve the above problem, the present disclosure proposes a method and a device for controlling a UPS to reduce the loss of the UPS, which are described in detail below in conjunction with specific examples.

With the method for controlling the UPS provided in the example of the present disclosure, a small number of devices within the UPS may be controlled to power the DC bus of the dormant power module when the UPS is in the bypass power supply mode, thereby ensuring a stability of the bus voltage of the power module. Processes of controlling different devices to power the DC bus will be described in conjunction with examples.

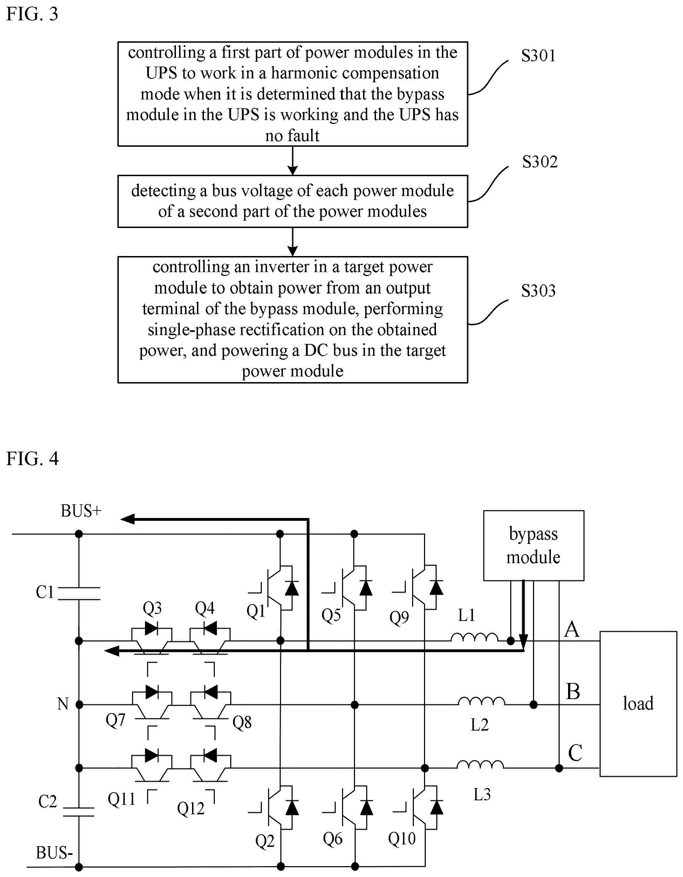

Reference is made to Figure 3, which is a flowchart of a method for controlling a UPS provided in the first example of the present disclosure. The method for controlling a UPS may be applied to the UPS as shown in Figure 1 and performed by a master controller in the UPS. In the actual application, each power module is provided with a slave control device. The master controller may be connected to the slave controller in the power module and control operations of a small number of devices in the inverter through the slave controller, to power the DC bus in the power module. As shown in Figure 3, the method mainly includes the following steps S301 to S303.

In step S301, a first part of the power modules in the UPS are controlled to work in a harmonic compensation mode, when it is determined that the bypass module in the UPS is working and the UPS has no fault. The UPS includes the first part of the power modules and a second part of the power modules.

It should be noted that in a case where the power modules and the bypass module in the UPS share the same power supply, the power modules and the bypass module are connected in parallel. In a case where the power modules and the bypass module in the UPS are powered by different power supplies, input terminals of the power modules and the bypass modules are connected to the respective power supplies, and output terminals of the power modules and the bypass module are connected to the load.

**In** the actual application, the bypass module may work when the UPS fails, and the master controller may control all the power modules to be powered off so that faulty components in the UPS can be repaired. Further, the bypass module may work when the UPS has no fault. Since the bypass module mainly includes a switching device, a filter, and other devices and does not have a voltage regulation function, when a voltage of the external AC power supply connected to the UPS fluctuates, the voltage outputted to the load will change accordingly, affecting normal operation of the load. In order to improve stability of power supply of the UPS, the master controller may control the first part of power modules of the UPS to perform harmonic compensation on the bypass module, so that the quality of power supply of the UPS may be improved, current harmonics may be optimized, and interference to the power grid may be reduced. The second part of power modules in the UPS may be in the sleep state so as to reduce device loss during the power supply of the UPS and further to improve the efficiency of the UPS.

Specifically, an output current of the bypass module is detected. When it is determined that the output current of the bypass module is greater than a second set value, the first part of the power modules are controlled to obtain power from the output terminal of the bypass module, and the obtained power is rectified to power the DC bus in the first part of the power modules or to charge the battery pack. When it is determined that the output current of the bypass module is less than the second set value, the first part of the power modules are controlled to obtain power from the internal DC bus, and the obtained power is inverted and outputted to the output terminal of the bypass module. In this way, stability of power supply is maintained. The second set value may be a rated current of a load connected to the rear end of the UPS.

It should be noted that since the DC bus is connected to the battery pack through the battery charger/discharger, when the output current of the bypass module is less than the second set value, the battery charger/discharger may be controlled to obtain power from the battery pack and output it to the output terminal of the bypass module through the DC bus and the first part of the power modules.

It should be noted that when the UPS supplies power by using the bypass module, the number of the power modules that perform harmonic compensation for the bypass module may be configured based on a power fluctuation of the external AC power supply connected to the UPS and requirements of the load for the supplied power. This is not specifically limited in the present disclosure.

In step S302, the bus voltage of each power module in the second part of the power modules is detected.

In the actual application, the power module is generally equipped with a voltage sensor, or the power module may be connected to an external voltage sensor. A terminal of the voltage sensor may be connected to the DC bus of the power module, and another terminal of the voltage sensor may be connected to the master controller in the UPS through the slave controller in the power module, or directly connected to the master controller in the UPS, so that the master controller may monitor the bus voltage status of each power module.

In step S303, an inverter in a target power module is controlled to obtain power from an output terminal of the bypass module, a single-phase rectification is performed on the obtained power, and a DC bus in the target power module is powered. The target power module refers to a power module which has a bus voltage less than a first set value among the second part of the power modules. The first set value may be set based on requirements for bus voltage amplitude when the power module supplies power.

In the UPS provided in the example of the present disclosure, the inverter is a three-phase inverter. Besides, the inverter is a bidirectional converter, that is, the inverter can work in the inverter state or the rectification state. When the inverter operates in the inverter state, the inverter obtains DC power from a DC bus connected to the input terminal of the inverter, converts the obtained DC power into AC power, and supplies the AC power to the load connected to the output terminal. When the inverter operates in the rectification state, the inverter obtains AC power from the output terminal of the bypass module connected to the output terminal of the inverter, converts the obtained AC power into DC power, and supplies the DC power to the DC bus connected to the input terminal.

In the actual application, in order to reduce the power supply cost for the DC bus when the UPS is in the bypass power supply mode, the three-phase inverter may be controlled to work in a single-phase rectification mode, that is, only a small number of devices in the inverter need to work, so that the power supply cost for the DC bus in the power module is effectively reduced. The three-phase inverter may also adopt a circuit topology with bidirectional power transmission that is commonly used in the industry. To facilitate understanding of the solution provided in the example of the present disclosure, the following description is made with an example in which the three-phase inverter adopts a T-type three-level inverter topology as shown in Figure 4.

As shown in Figure 4, the three-phase inverter includes switching transistors Q1 to Q12 and inductors L1 to L3. The switching transistors Q1 to Q4 and the inductor L1 constitute a single-phase inverter and are connected to a phase line that outputs A-phase AC power on the output side of the bypass module. The switching transistors Q5 to Q8 and the inductor L2 constitute a single-phase inverter and are connected to a phase line that outputs B-phase AC power on the output side of the bypass module. The switching transistors Q9 to Q12 and the inductor L3 may constitute a single-phase inverter and are connected to a phase line that outputs C-phase AC power on the output side of the bypass module. The A-phase AC power, the B-phase AC power and the C-phase AC power constitute a three-phase AC power.

In the actual application, since each single-phase inverter in the three-phase inverter may perform conversion of a single-phase AC power, one of the single-phase inverters may be controlled to work and the other single-phase inverters may be turned off, so that the loss caused by operation of 2/3 of the devices in the inverter can be reduced. Therefore, the device loss of the UPS can be effectively reduced and the efficiency of the UPS can be improved while supplying power to the DC bus in the power module. In the example where the single-phase inverter connected to the phase line which outputs the A-phase AC power works, a transmission direction of the supplied power may be as shown in Figure 4.

It should be noted that when the UPS is applied in a high-power power supply scenario, each power module may be equipped with multiple three-phase inverters connected in parallel, to increase the inverter power. When the bypass module supplies power, the second part of the power modules do not participate in the power supply to the load, and there are fewer devices that consume power. In order to reduce the power supply cost for the DC bus, one or more of the three-phase inverters may be controlled to work for single-phase rectification so as to supply power to the DC bus, and the other three-phase inverters may stop working and be in a sleep state. The number of the three-phase inverters involved in the power supply to the DC bus is not specifically limited in the present disclosure.

In a possible implementation, in the three-phase inverter shown in Figure 4, inductors L1 to L3 are generally connected to the output terminal of the bypass module through independent relays respectively, and the relays connected to the inductors L1 to L3 may be closed. In this case, the three-phase inverter in the power module may obtain the three-phase AC power outputted by the bypass module, and the master controller controls the three-phase inverter to perform single-phase rectification on the three-phase AC power, and supplies the rectified DC power to the DC bus.

In a possible implementation, in the three-phase inverter shown in Figure 4, inductors L1 to L3 are generally connected to the output terminal of the bypass module through independent relays respectively, and one relay of the relays may be closed and the other relays may be switched off. In this case, the three-phase inverter in the power module may obtain single-phase AC power from the three-phase AC power outputted by the bypass module, and the master controller controls the three-phase inverter to perform rectification on the obtained single-phase AC power, and supplies the rectified DC power to the DC bus.

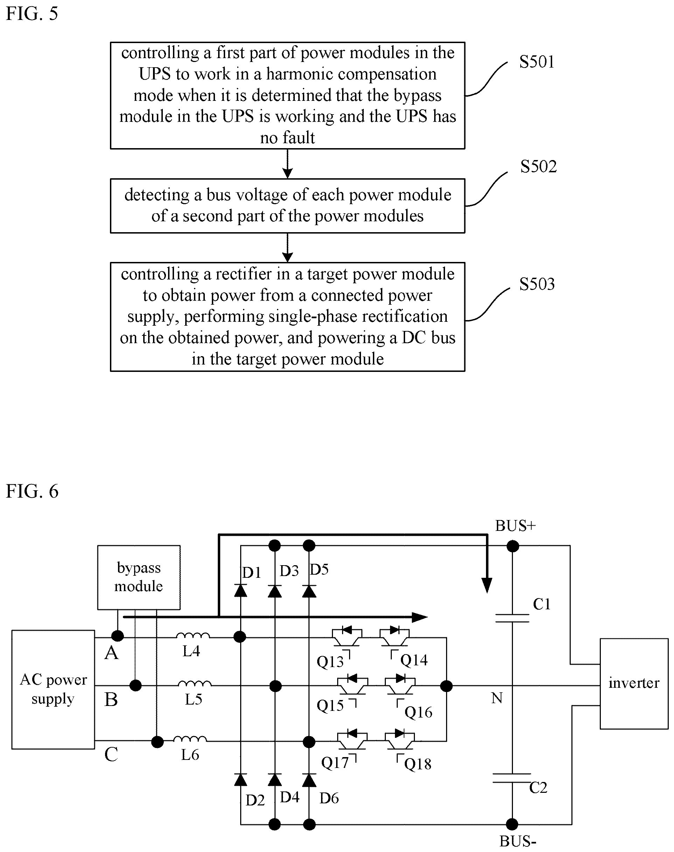

Reference is made to Figure 5, which is a flowchart of a method for controlling a UPS provided in the second example of the present disclosure. This method for controlling a UPS may be applied to the UPS as shown in Figure 1 and executed by a master controller in the UPS. In the actual application, each power module is equipped with a slave controller. The master controller may be connected to the slave controller and control a small number of devices in the rectifier through the slave controller, to supply power to the DC bus in the power module. As shown in Figure 5, the method mainly includes the following steps S501 to S503.

In step S501, a first part of the power modules in the UPS are controlled to work in a harmonic compensation mode when it is determined that the bypass module in the UPS is working and the UPS has no fault. The UPS includes the first part of the power modules and a second part of the power modules.

Specifically, an output current of the bypass module is detected. When it is determined that the output current of the bypass module is greater than a second set value, the first part of the power modules are controlled to obtain power from the output terminal of the bypass module, and the obtained power is rectified to power the DC bus in the first part of the power modules or to charge the battery pack. When it is determined that the output current of the bypass module is less than the second set value, the first part of the power modules are controlled to obtain power from the internal DC bus, and the obtained power is inverted and outputted to the output terminal of the bypass module. In this way, stability of power supply is maintained. The second set value may be a rated current of a load connected to the rear end of the UPS.

It should be noted that since the DC bus is connected to the battery pack through the battery charger/discharger, when the output current of the bypass module is less than the second set value, the battery charger/discharger may be controlled to obtain power from the battery pack and output it to the output terminal of the bypass module through the DC bus and the first part of the power modules.

It should be noted that when the UPS supplies power by using the bypass module, the number of power modules that perform harmonic compensation for the bypass module may be configured based on a power fluctuation of the external AC power supply connected to the UPS and requirements of the load for the supplied power. This is not specifically limited in the present disclosure.

In step S502, the bus voltage of each power module in the second part of the power modules is detected.

In the actual application, the power module is generally equipped with a voltage sensor, or the power module may be connected to an external voltage sensor. A terminal of the voltage sensor may be connected to the DC bus of the power module, and another terminal of the voltage sensor may be connected to the master controller in the UPS through the slave controller in the power module, or directly connected to the master controller in the UPS, so that the master controller may monitor the bus voltage status of each power module.

In step S503, a rectifier in a target power module is controlled to obtain power from a connected power supply, a single-phase rectification is performed on the obtained power, and a DC bus in the target power module is powered. The target power module refers to a power module which has a bus voltage less than a first set value among the second part of the power modules.

In the actual application, when the power modules and the bypass module in the UPS share the same power supply, the rectifier in the target power module may obtain power from the input terminal of the bypass module. When the power modules and the bypass module in the UPS are powered by different power supplies, the rectifier in the target power module may obtain power from the connected independent power supply.

In the UPS provided in the example of the present disclosure, the rectifier is a three-phase rectifier, and the input terminal of the rectifier and the input terminal of the bypass module are both connected to the AC power supply. The rectifier may obtain the three-phase AC power outputted by the AC power supply through the input terminal and convert the AC power into DC power, thereby powering the DC bus connected to the output terminal. In the actual application, in order to reduce the power supply cost for the DC bus when the UPS is in the bypass power supply mode, the three-phase rectifier may be controlled to work in a single-phase rectification mode, that is, only a small number of devices in the rectifier need to work, so that the power supply cost for the DC bus in the power module is effectively reduced. The three-phase rectifier may also adopt a circuit topology having rectification function that is commonly used in the industry. To facilitate understanding of the solution provided in the example of the present disclosure, the following description is made with an example in which the three-phase rectifier adopts a Vienna rectification topology as shown in Figure 6.

As shown in Figure 6, the three-phase rectifier includes switching transistors Q13 to Q18, inductors L4 to L6, and diodes D1 to D6. The inductor L4 is connected to a phase line that outputs A-phase AC power in the AC power supply, the inductor L5 is connected to a phase line that outputs B-phase AC power in the AC power supply, and the inductor L6 is connected to a phase line that outputs C-phase AC power in the AC power supply. The diode D1, the diode D2, the inductor L4, the switching transistor Q13 and the switching transistor Q14 may constitute a rectifier branch for the A-phase AC power. The diode D3, the diode D4, the inductor L5, the switching transistor Q15 and the switching transistor Q16 may constitute a rectifier branch for the B-phase AC power. The diode D5, the diode D6, the inductor L6, the switching transistor Q17 and the switching transistor Q18 may constitute a rectifier branch for the C-phase AC power. For ease of understanding, rectification of the A-phase AC power is described as an example, and a direction of power transmission may be as shown in Figure 6.

As shown in Figure 6, single-phase rectification may be performed by the three-phase rectifier by controlling ON and OFF of only two switching transistors while the other switching transistors are turned off, so that the device loss of the rectifier during power supply process for the DC bus can be effectively reduced. Therefore, the device loss of the UPS can be effectively reduced and the efficiency of the UPS can be improved while supplying power to the DC bus in the power module.

It should be noted that when the UPS is applied in a high-power power supply scenario, each power module may be equipped with multiple three-phase rectifiers connected in parallel, to increase the rectification power of the power module. As the second part of the power modules do not participate in the power supply to the load, there are fewer internal devices which consume the power of the DC bus. In order to further reduce the device loss during the power supply process for the DC bus, one or more of the three-phase rectifiers may be controlled to perform single-phase rectification so as to supply power to the DC bus, and the other three-phase rectifiers may stop working and be in a sleep state. The number of the three-phase rectifiers involved in the power supply to the DC bus is not specifically limited in the present disclosure.

In a possible implementation, in the three-phase rectifier shown in Figure 6, inductors L4 to L6 are generally connected to the input terminal of the bypass module and an AC power supply through independent relays or other switching devices respectively, and the relays connected to the inductors L4 to L6 may be closed. In this case, the three-phase rectifier in the power module may obtain the three-phase AC power transmitted from the AC power supply, and the master controller controls the three-phase rectifier to perform single-phase rectification on the three-phase AC power, and supplies the rectified DC power to the DC bus.

In a possible implementation, the master controller may control one of the relays to be closed and the other relays to be switched off. In this case, the three-phase rectifier in the power module may obtain single-phase AC power from the three-phase AC power transmitted from the AC power supply, and the master controller controls the three-phase rectifier to perform rectification on the obtained single-phase AC power, and supplies the rectified DC power to the DC bus.

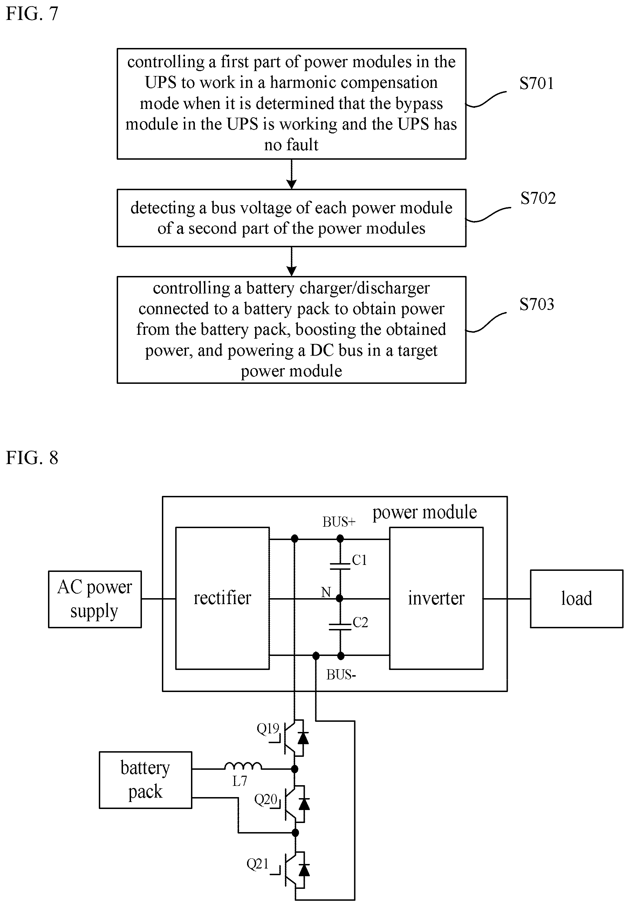

Reference is made to Figure 7, which is a flowchart of a method for controlling a UPS provided in the third example of the present disclosure. This method for controlling a UPS may be applied to the UPS as shown in Figure 1 and executed by a master controller in the UPS. As shown in Figure 7, the method mainly includes the following steps S701 to S703.

In step S701, a first part of the power modules in the UPS are controlled to work in a harmonic compensation mode when it is determined that the bypass module in the UPS is working and the UPS has no fault. The UPS includes the first part of the power modules and a second part of the power modules.

Specifically, an output current of the bypass module is detected. When it is determined that the output current of the bypass module is greater than a second set value, the first part of the power modules are controlled to obtain power from the output terminal of the bypass module, and the obtained power is rectified to power the DC bus in the first part of the power modules or to charge the battery pack. When it is determined that the output current of the bypass module is less than the second set value, the first part of the power modules are controlled to obtain power from the internal DC bus, and the obtained power is inverted and outputted to the output terminal of the bypass module. In this way, stability of power supply is maintained. The second set value may be a rated current of a load connected to the rear end of the UPS.

It should be noted that since the DC bus is connected to the battery pack through the battery charger/discharger, when the output current of the bypass module is less than the second set value, the battery charger/discharger may be controlled to obtain power from the battery pack and output it to the output terminal of the bypass module through the DC bus and the first part of the power modules.

It should be noted that when the UPS supplies power by using the bypass module, the number of the power modules that perform harmonic compensation for the bypass module may be configured based on a power fluctuation of the external AC power supply connected to the UPS and requirements of the load for the supplied power. This is not specifically limited in the present disclosure.

**In** step S702, the bus voltage of each power module in the second part of the power modules is detected.

**In** the actual application, the power module is generally equipped with a voltage sensor, or the power module may be connected to an external voltage sensor. A terminal of the voltage sensor may be connected to the DC bus of the power module, and another terminal of the voltage sensor may be connected to the master controller in the UPS through the slave controller in the power module, or directly connected to the master controller in the UPS, so that the master controller may monitor the bus voltage status of each power module.

**In** step S703, the battery charger/discharger connected to the battery pack is controlled to obtain power from the battery pack, the obtained power is boosted to power a DC bus in a target power module. The target power module refers to a power module which has a bus voltage less than a first set value among the second part of the power modules.

In the UPS provided in the example of the present disclosure, the battery charger/discharger is a DC converter, and the battery charger/discharger can realize bidirectional transmission of power. When the battery charger/discharger obtains power from the battery pack, the battery charger/discharger performs a voltage boost operation to boost the voltage of the battery pack to a rated voltage of the bus and to power the DC bus. When the battery charger/discharger obtains power from the DC bus, the battery charger/discharger performs a buck operation to reduce the bus voltage to a charging voltage of the battery pack and to charge the battery pack.

In the actual application, since there are only a small number of switching transistors within the battery charger/discharger, when the battery charger/discharger is controlled to power the DC bus, the power supply cost for the DC bus can be effectively reduced. The battery charger/discharger may also adopt a circuit topology having boost function and buck function that is common in the industry. To facilitate understanding of the solution to be protected by the present disclosure, a specific example of the battery charger/discharger is given below.

Reference is made to Figure 8, which is a schematic structural diagram of a battery charger/discharger. The battery charger/discharger includes switching transistors Q19 to Q21 and an inductor L7. As shown in Figure 8, the inductor L7, the switching transistor Q19 and the switching transistor Q20 constitute a BOOST circuit. The switching transistor Q20 may be turned on to store energy in the inductor L7. When the inductor L7 has finished storing energy, the switching transistor Q20 is turned off. In this case, the power stored in the inductor L7 is added to the power outputted by the battery pack, and the added power is then supplied to the DC bus through a parasitic diode of the switching transistor Q19. A power transmission direction during the power supply process may be as shown in Figure 8.

As shown in Figure 8, the power supply to the DC bus by the battery charger/discharger may be performed by controlling ON and OFF of only one switching transistor. The other devices are all turned off and the power modules are in the sleep state, so that the device loss during the power supply process for the DC bus can be effectively reduced. Therefore, the device loss of the UPS can be effectively reduced and the efficiency of the UPS can be improved while supplying power to the DC bus in the power module.

It should be noted that different loads have different requirements for the battery pack's power supply duration when the external power supply is cut off. When the UPS is applied in a high-power power supply scenario, the battery charger/discharger connected between each power module and the battery pack may be equipped with multiple battery charging and discharging circuits which are connected in parallel. A structure of each battery charging and discharging circuit may be as shown in Figure 8, or may adopt a circuit topology or a chip with the above-mentioned functions which are common in the industry.

In the actual application, since the second part of the power modules do not participate in the power supply to the load, and since there are fewer energy consumption devices of the DC bus, in order to further reduce the device loss during the power supply process for the DC bus, one or more of the battery charging and discharging circuits may be controlled to power the DC bus, and the other battery charging and discharging circuits may stop working and be in a sleep state. The number of the battery charging and discharging circuits involved in the power supply to the DC bus is not specifically limited in the present disclosure.

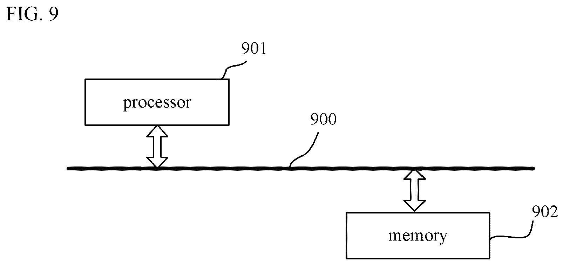

Based on the same inventive concept, a device for controlling a UPS is further provided in an example of the present disclosure. This device may perform the method for controlling the UPS as described above. As shown in Figure 9, the device for controlling the UPS includes:

at least one processor 901, and a memory 902 connected to the at least one processor 901. A specific connection medium between the processor 901 and the memory 902 is not limited in the example of the present disclosure. Figure 9 illustrates an example where the processor 901 is connected to the memory 902 via a bus 900. The bus 900 is represented by a thick line in Figure 9, and connections among other components are described only for illustrative purpose and are not limited. The bus 900 may include an address bus, a data bus, a control bus, and the like. For ease of representation, the bus is shown in Figure 9 as a single thick line, which does not mean that there is only one bus or one type of bus. Alternatively, the processor 901 may be referred to as a controller, the name of which is not limited.

In an example of the present disclosure, the memory 902 stores instructions executable by the at least one processor 901. The at least one processor 901 may perform the method for controlling the UPS discussed above by executing the instructions stored in the memory 902.

The processor 901 is a control center of the device, and may be connected to various parts of the control device by using various interfaces and wires. By running or executing the instructions stored in memory 902 and by invoking data stored in memory 902 and various functions and processing data of the device, the device may be monitored.

The processor 901 may be a general-purpose processor such as central processing unit (CPU), digital signal processor, dedicated integrated circuit, field programmable gate array or other programmable logic device, discrete gate circuit or transistor logic device, or discrete hardware component, and can implement or perform the method, steps, and logic block diagrams disclosed in the examples of the present disclosure. The general-purpose processor may be a microprocessor or any conventional processor. The steps of the method for controlling the UPS disclosed in conjunction with the examples of the present disclosure may be directly performed by hardware processors, or be performed by a combination of hardware and software modules in the processor.

The memory 902 is a non-volatile computer-readable storage medium that stores non-volatile software programs, non-volatile computer executable programs, and modules. The memory 902 may include at least one type of storage medium, for example, flash memory, hard disk, multimedia card, card-type memory, random-access memory (RAM), static random-access memory (SRAM), programmable read-only memory (PROM), read-only memory (ROM), electrically erasable programmable read-only memory (EEPROM), magnetic memory, disk, optical disk, and the like. The memory 902 is, but is not limited to, any other medium that can carry or store desired program codes in a form of instructions or data structures and that can be accessed by a computer. The memory 902 in the example of the present disclosure may be circuitry or any other device capable of implementing a storage function, for storing program instructions and/or data.

By designing and programming the processor 901, the code corresponding to the method for controlling the UPS described in the above examples can be fixed into a chip, so that the chip can execute the steps of the method as in the above examples when running. How to design and program the processor 901 is a technique known to those skilled in the art and is not described in detail here.

Those skilled in the art should appreciate that examples of the present disclosure may be provided as a method, a system, or a computer program product. Therefore, the present disclosure may be implemented by an entirely hardware example, an entirely software example, or an example combining software and hardware. Furthermore, the present disclosure may be implemented as a computer program product embodied on one or more computer-usable storage medium (including, but not limited to, magnetic disk storage, CD-ROM, or optical storage) including computer-usable program codes therein.

The present disclosure is described with reference to flow charts and/or block diagrams of the method, the device (system), and the computer program product according to the examples of the present disclosure. It should be understood that each process and/or block in the flow charts and/or block diagrams, and combinations of processes and/or blocks in the flow charts and/or block diagrams, may be implemented by computer program instructions. The computer program instructions may be provided to processors of a general-purpose computer, a dedicated computer, an embedded processor, or other programmable data processing device to produce a machine, such that the instructions executed by the processors of the computer or other programmable data processing device may produce a device for implementing functions specified in one or more processes of the flow charts and/or one or more blocks of the block diagrams.

The computer program instructions may also be stored in a computer readable memory which is capable of guiding the computer or other programmable data processing device to operate in a certain manner, such that the instructions stored in the computer readable memory may generate a product including an instruction device which implements the functions specified in one or more processes of the flow charts and/or one or more blocks of the block diagrams.

These computer program instructions may also be loaded onto the computer or other programmable data processing device, causing a series of operating steps to be performed on the computer or other programmable device to produce computer-implemented processing, so that the instructions executed on the computer or other programmable device may provide steps for implementing functions specified in one or more processes of the flow charts and/or one or more blocks of the block diagrams.

Apparently, various modifications and variations to the examples of the present disclosure can be made by those skilled in the art without departing from the scope of the present disclosure. Hence, if the modifications and variations of the present disclosure fall within the scope of the claims and equivalents thereof, the present disclosure is intended to include such modifications and variations.

Described herein are also the following clauses:
1. A method for controlling an uninterruptible power supply (UPS), characterized in that the method is applied to a UPS having a bypass module, and the method comprises: controlling a first part of power modules in the UPS to work in a harmonic compensation mode, when it is determined that the bypass module in the UPS is working and the UPS has no fault, wherein the UPS comprises the first part of the power modules and a second part of the power modules; detecting a bus voltage of each power module of the second part of the power modules; controlling an inverter in a target power module to obtain power from an output terminal of the bypass module, performing single-phase rectification on the obtained power, and powering a direct current (DC) bus in the target power module, wherein the target power module is a power module which has a bus voltage less than a first set value among the second part of the power modules.
2. The method according to clause 1, characterized in that the controlling an inverter in a target power module to obtain power from an output terminal of the bypass module and the performing single-phase rectification on the obtained power comprise: controlling the inverter in the target power module to obtain a three-phase alternating current (AC) power outputted by the bypass module, and performing the single-phase rectification on the three-phase AC power.
3. The method according to clause 1, characterized in that the controlling an inverter in a target power module to obtain power from an output terminal of the bypass module and the performing single-phase rectification on the obtained power comprise: controlling the inverter in the target power module to obtain a single-phase AC power from a three-phase AC power outputted by the bypass module, and performing rectification on the obtained single-phase AC power.
4. The method according to clause 1, characterized in that, when each of the power modules comprises a plurality of inverters connected in parallel, the performing single-phase rectification on the obtained power comprises: controlling a target inverter in the target power module to perform the single-phase rectification on the obtained power and controlling other inverters to stop working, wherein the target inverter is any one of the inverters in the target power module, and the other inverters are inverters other than the target inverter in the target power module.
5. A method for controlling a UPS, characterized in that the method is applied to a UPS having a bypass module, and the method comprises: controlling a first part of power modules in the UPS to work in a harmonic compensation mode, when it is determined that the bypass module in the UPS is working and the UPS has no fault, wherein the UPS comprises the first part of the power modules and a second part of the power modules; detecting a bus voltage of each power module of the second part of the power modules; controlling a rectifier in a target power module to obtain power from a connected power supply, performing single-phase rectification on the obtained power, and powering a DC bus in the target power module, wherein the target power module is a power module which has a bus voltage less than a first set value among the second part of the power modules.
6. The method according to clause 5, characterized in comprising: controlling the rectifier in the target power module to obtain a three-phase AC power received by an input terminal of the bypass module, and performing the single-phase rectification on the obtained three-phase AC power.
7. The method according to clause 5, characterized in comprising: controlling the rectifier in the target power module to obtain a single-phase AC power from a three-phase AC power received by an input terminal of the bypass module, and performing rectification on the obtained single-phase AC power.
8. The method according to clause 5, characterized in that, when each of the power modules comprises a plurality of rectifiers connected in parallel, the performing single-phase rectification on the obtained power comprises: controlling a target rectifier in the target power module to perform the single-phase rectification on the obtained power and controlling other rectifiers to stop working, wherein the target rectifier is any one of the rectifiers in the target power module, and the other rectifiers are rectifiers other than the target rectifier in the target power module.
9. A method for controlling a UPS, characterized in that the method is applied to a UPS having a bypass module, and the method comprises: controlling a first part of power modules in the UPS to work in a harmonic compensation mode, when it is determined that the bypass module in the UPS is working and the UPS has no fault, wherein the UPS comprises the first part of the power modules and a second part of the power modules; detecting a bus voltage of each power module of the second part of the power modules; controlling a battery charger/discharger connected to a battery pack to obtain power from the battery pack, boosting the obtained power, and powering a DC bus in a target power module, wherein the target power module is a power module which has a bus voltage less than a first set value among the second part of the power modules.
10. The method according to clause 9, characterized in that when each battery charger/discharger comprises a plurality of battery charging and discharging circuits connected in parallel, the boosting the obtained power and the powering a DC bus in a target power module comprise: controlling a target battery charging and discharging circuit to boost the obtained power to power the DC bus in the target power module, and controlling other battery charging and discharging circuits to stop working, wherein the target battery charging and discharging circuit is any one of the battery charging and discharging circuits in the battery charger/discharger, and the other battery charging and discharging circuits are battery charging and discharging circuits other than the target battery charging and discharging circuit in the battery charger/discharger.
11. A device for controlling a UPS, characterized in comprising: at least one processor; and a memory communicatively connected to the at least one processor, wherein the memory stores instructions executable by the at least one processor, the instructions are executed by the at least one processor to cause the at least one processor to perform the method for controlling a UPS according to any one of clauses 1 to 4, or the method for controlling a UPS according to any one of clauses 5 to 8, or the method for controlling a UPS according to any one of clauses 9 to 10.
12. A method for controlling a UPS, characterized in that the method is applied to a UPS having a bypass module, and the method comprises: controlling a first part of power modules in the UPS to work in a harmonic compensation mode, when it is determined that the bypass module in the UPS is working and the UPS has no fault, wherein the UPS comprises the first part of the power modules and a second part of the power modules; detecting a bus voltage of each power module of the second part of the power modules; and controlling an inverter in a target power module to obtain power from an output terminal of the bypass module, performing single-phase rectification on the obtained power, and powering a direct current, DC, bus in the target power module, wherein the target power module is a power module which has a bus voltage less than a first set value among the second part of the power modules; or controlling a rectifier in a target power module to obtain power from a connected power supply, performing single-phase rectification on the obtained power, and powering a DC bus in the target power module, wherein the target power module is a power module which has a bus voltage less than a first set value among the second part of the power modules; or controlling a battery charger/discharger connected to a battery pack to obtain power from the battery pack, boosting the obtained power, and powering a DC bus in a target power module, wherein the target power module is a power module which has a bus voltage less than a first set value among the second part of the power modules.

## Claims

1. A method for controlling an uninterruptible power supply, UPS, wherein the method is applied to a UPS having a bypass module, and the method comprises:
controlling a first part of power modules in the UPS to work in a harmonic compensation mode, when it is determined that the bypass module in the UPS is working and the UPS has no fault, wherein the UPS comprises the first part of the power modules and a second part of the power modules;
detecting a bus voltage of each power module of the second part of the power modules; and
controlling an inverter in a target power module to obtain power from an output terminal of the bypass module, performing single-phase rectification on the obtained power, and powering a direct current, DC, bus in the target power module, wherein the target power module is a power module which has a bus voltage less than a first set value among the second part of the power modules; or
controlling a rectifier in a target power module to obtain power from a connected power supply, performing single-phase rectification on the obtained power, and powering a DC bus in the target power module, wherein the target power module is a power module which has a bus voltage less than a first set value among the second part of the power modules; or
controlling a battery charger/discharger connected to a battery pack to obtain power from the battery pack, boosting the obtained power, and powering a DC bus in a target power module, wherein the target power module is a power module which has a bus voltage less than a first set value among the second part of the power modules.

2. The method according to claim 1, wherein the controlling an inverter in a target power module to obtain power from an output terminal of the bypass module and the performing single-phase rectification on the obtained power comprise:
controlling the inverter in the target power module to obtain a three-phase alternating current, AC, power outputted by the bypass module, and performing the single-phase rectification on the three-phase AC power.

3. The method according to claim 1, wherein the controlling an inverter in a target power module to obtain power from an output terminal of the bypass module and the performing single-phase rectification on the obtained power comprise:
controlling the inverter in the target power module to obtain a single-phase AC power from a three-phase AC power outputted by the bypass module, and performing rectification on the obtained single-phase AC power.

4. The method according to any preceding claim, wherein when each of the power modules comprises a plurality of inverters connected in parallel, the performing single-phase rectification on the obtained power comprises:
controlling a target inverter in the target power module to perform the single-phase rectification on the obtained power and controlling other inverters to stop working, wherein the target inverter is any one of the inverters in the target power module, and the other inverters are inverters other than the target inverter in the target power module.

5. The method according to claim 1, further comprising:
controlling the rectifier in the target power module to obtain a three-phase AC power received by an input terminal of the bypass module, and performing the single-phase rectification on the obtained three-phase AC power.

6. The method according to claim 1, further comprising:
controlling the rectifier in the target power module to obtain a single-phase AC power from a three-phase AC power received by an input terminal of the bypass module, and performing rectification on the obtained single-phase AC power.

7. The method according to any one of claims 5 to 6, wherein when each of the power modules comprises a plurality of rectifiers connected in parallel, the performing single-phase rectification on the obtained power comprises:
controlling a target rectifier in the target power module to perform the single-phase rectification on the obtained power and controlling other rectifiers to stop working, wherein the target rectifier is any one of the rectifiers in the target power module, and the other rectifiers are rectifiers other than the target rectifier in the target power module.

8. The method according to claim 1, wherein when each battery charger/discharger comprises a plurality of battery charging and discharging circuits connected in parallel, the boosting the obtained power and the powering a DC bus in a target power module comprise:
controlling a target battery charging and discharging circuit to boost the obtained power to power the DC bus in the target power module, and controlling other battery charging and discharging circuits to stop working, wherein the target battery charging and discharging circuit is any one of the battery charging and discharging circuits in the battery charger/discharger, and the other battery charging and discharging circuits are battery charging and discharging circuits other than the target battery charging and discharging circuit in the battery charger/discharger.

9. A device for controlling a UPS, **characterized in** comprising:
at least one processor; and
a memory communicatively connected to the at least one processor,
wherein the memory stores instructions executable by the at least one processor, the instructions are executed by the at least one processor to cause the at least one processor to perform the method for controlling a UPS according to any one of claims 1 to 8.
